# EUROPEAN PATENT SPECIFICATION

(11) **EP 4 526 163 B1**
(45) Date of publication and mention of the grant of the patent: **11.03.2026**
(21) Application number: 22729601.9
(22) Date of filing: 18.05.2022
(51) Int. Cl.: B60T 7/12, B60T 17/18

(54) **A SAFETY ARRANGEMENT FOR A VEHICLE**
EINE SICHERHETSANORDNUNG FÜR FAHRZEUG
INSTALLATION DE SÉCURITÉ POUR VÉHICULE

(43) Date of publication of application: 26.03.2025
(73) Proprietor: Volvo Autonomous Solutions AB, 405 08 Göteborg (SE)
(72) Inventor: HAGERSKANS, Jonas, 438 33 Landvetter (SE)
(74) Representative: Kransell & Wennborg KB
(86) International application number: PCT/EP2022/063461
(87) International publication number: WO 2023/222217

(56) References cited:
- CN-A- 112 849 215
- CN-A- 113 825 688
- CN-U- 201 771 508
- US-A- 4 838 617
- US-A1- 2002 033 637
- US-B1- 6 322 161

## Description

### TECHNICAL FIELD

The invention relates to a safety arrangement for a vehicle, which vehicle comprises a brake and an emergency stop circuit, wherein the brake is configured to be automatically applied in response to breaking of the emergency stop circuit. The invention further relates to a vehicle comprising such a safety arrangement.

The invention is applicable on heavy-duty vehicles such as working machines within the fields of industrial construction machines or construction equipment, in particular on autonomous working machines such as autonomous dump trucks and similar. Although the invention will be described with respect to an autonomous hauler truck, the invention is not restricted to this particular working machine, but may also be used for other working machines such as construction equipment, tractors, wheel loaders, articulated haulers, dump trucks, excavators, backhoe loaders, etc.

### BACKGROUND

Autonomous vehicle systems are complex and consist of hardware as well as software in several layers, such as the vehicle and its components, a motion controller, and a virtual driver. The autonomous vehicle system has by design the authority to request motion of the vehicle, which may typically have a large mass and torque capacity. Faults and bugs may therefore result in unexpected and/or uncontrolled movement of the vehicle and ultimately run-away situations. Such run-away situations are potentially very dangerous and must therefore be avoided.

In the development phase of an autonomous vehicle system, there is a constant need for integrating and testing new software. Since it is hard to fully verify the software in simulation and rigs, the final verification always needs to be performed in the target vehicle. One way to mitigate the risk associated with such final verification is to lift the vehicle so that the wheels are not in contact with ground. This typically requires the use of cranes or other lifting devices. Such cranes or lifting devices are cumbersome and might not even be available for heavy vehicles, such as heavy working machines. Systems are known for automatically stopping vehicles which approach to obstacles, like in case of the protection system of CN112849215A.

In view of the above, there is a strive to develop solutions that mitigate the risk associated with testing of autonomous vehicle systems.

### SUMMARY

An object of the invention is to provide an improved safety arrangement for a vehicle, which alleviates at least one of the drawbacks of the prior art, or which at least provides a suitable alternative. In particular, it is an object to provide a safety arrangement suitable for use during testing of autonomous vehicles.

According to a first aspect of the invention, the object is achieved by a safety arrangement according to claim 1.

Thus, a safety arrangement for a vehicle, such as a working machine, is provided. The vehicle comprises a brake and a first emergency stop circuit, wherein the brake is configured to be automatically applied in response to breaking of the first emergency stop circuit. The safety arrangement comprises:
- a first transponder assembly comprising a transponder and an activator,
- a first safety relay configured to be connected in series to the first emergency stop circuit so that opening of the first safety relay breaks the first emergency stop circuit and triggers application of the brake, wherein the first safety relay is configured to open automatically in the absence of a first safety signal from the transponder,

wherein the transponder is configured to output said first safety signal to the first safety relay only when the activator is located within a predetermined distance range from the transponder,
wherein a first one of the transponder and the activator is configured to be attached to the vehicle,
wherein a second one of the transponder and the activator is configured to be attached to the vehicle within the predetermined distance range from the first one of the transponder and the activator, and releasable from the vehicle by application of a pulling force, and
wherein the safety arrangement further comprises a mechanical member configured for pulling on the second one of the transponder and the activator when the vehicle starts to move, thereby pulling the transponder and the activator apart and triggering the opening of the first safety relay and the application of the brake.

Autonomous vehicles, such as autonomous working machines, are normally provided with an emergency stop circuit that enables an operator to apply a brake by breaking the circuit, such as by pushing an emergency stop button or similar. A signal is sent to one or more brake actuators onboard the vehicle as long as the emergency stop circuit is closed. An active signal is required for the machine to operate, and as soon as the emergency stop circuit is broken, the signal is disrupted, and the brake is applied. The emergency stop circuit will be broken if an emergency stop is requested by pushing the button, and/or if there is a component failure.

By the provision of a safety arrangement which comprises a transponder assembly and a mechanical member as defined above, it is possible to ensure that the brake of the vehicle is automatically applied if the vehicle starts to move. Thus, an additional emergency stop function is provided, which is automatically triggered in case of unexpected movement. This emergency stop function is additional or alternative to, e.g., an emergency stop button or similar that can be used by an operator to trigger an emergency stop via the emergency stop circuit.

The proposed safety arrangement removes the need for using cranes or similar lifting devices during testing of autonomous vehicle systems, such as during development, training, or maintenance/service. This greatly facilitates the testing procedure.

The safety arrangement may be temporarily connected to the vehicle before the testing by connecting the safety relay in series to the first emergency stop circuit and attaching the transponder assembly and the mechanical member to the vehicle.

The first one of the transponder and the activator is configured to remain attached to the vehicle when the pulling force is applied to the second one of the transponder and the activator. The first one is preferably the transponder and the second one is preferably the activator.

Optionally, the mechanical member comprises an elongated flexible member configured to be attached to an object arranged in a fixed relation to a ground surface of the vehicle. The mechanical member, which may herein be a wire, a rope, a sling, or similar, may e.g. be arranged to be fixed to a bolt provided in a wall or in the ground, or to a heavy object placed on the ground surface. Of course, the mechanical member should have an ultimate tensile strength which is high enough to ensure that the force needed to break the mechanical member is higher than that needed to pull the transponder and the activator apart.

Optionally, the second one of the transponder and the activator is releasably attachable to the vehicle by means of at least one second magnet. By attaching the second one of the transponder and the activator to the vehicle by means of one or more magnets, it may be easily attached for temporary testing. The strength of the magnet(s) should be selected so that detachment upon application of the pulling force is ensured. Other options for attaching the second one of the transponder and the activator to the vehicle include adhesive, sticky tape, glue, etc.

Still optionally, the first one of the transponder and the activator is attachable to the vehicle by means of at least one first magnet, wherein optionally the at least one first magnet is stronger than the at least one second magnet. Thus, the first one of the transponder and the activator may be semi-permanently attached to the vehicle by means of one or more magnets, such as one or more relatively strong magnets. When the first magnet(s) is/are stronger than the second magnet(s), it is ensured that the first one of the transponder and the activator is more firmly attached to the vehicle than the second one. However, this is not absolutely necessary, since the mechanical pulling force is typically applied to the first one of the transponder and the activator only.

In alternative embodiments, the first one of the transponder and the activator is attachable to the vehicle by means of at least one mechanical fastening device, such as one or more bolts or screws, clamps, or similar. Other options for attaching the first one of the transponder and the activator to the vehicle include adhesive, sticky tape, glue, etc.

Optionally, the first one of the transponder and the activator is the transponder and the second one is the activator. The transponder is thereby configured to remain fixed to the vehicle as the pulling force is applied to the activator, pulling the activator off from the vehicle and away from the transponder. By arranging the transponder fixed to the vehicle in this way, a wired connection between the transponder and the safety relay can more easily be achieved.

Optionally, the transponder is electrically and/or communicatively connected to the first safety relay by a wired connection. The wired connection ensures robustness of the safety arrangement.

Optionally, the transponder and the activator are uniquely pair coded. This means that the transponder will only respond to a unique activator and not to any other activator, regardless of where the other activator is located with respect to the transponder. Undesired interaction of any other component with the safety arrangement or manipulation of the safety arrangement that may, e.g., lead to undesired hindering of an emergency stop, i.e., that the brake is not triggered as it should, is thereby prevented.

Optionally, the safety arrangement further comprises a second safety relay, wherein the second safety relay is configured to be connected in series to a second emergency stop circuit of the vehicle, and wherein the brake is configured to be automatically applied in response to breaking of the second emergency stop circuit. By using two separately controlled safety relays and two emergency stop circuits, it is possible to improve the reliability of the safety arrangement.

Optionally, the second safety relay is configured to open automatically in the absence of a second safety signal from the transponder, and the transponder is configured to output said second safety signal to the second safety relay only when the activator is located within the predetermined distance range from the transponder. Thus, a single transponder assembly providing two safety signals is used.

Optionally, the safety arrangement further comprises a second transponder assembly comprising a transponder and an activator, wherein the second safety relay is configured to open automatically in the absence of a second safety signal from the transponder of the second transponder assembly. The second transponder assembly may be configured to output said second safety signal to the second safety relay only when the activator of the second transponder assembly is located within a predetermined distance range from the transponder of the second transponder assembly. The second transponder assembly may be of the same type as the first transponder assembly, and the components thereof may be mounted to the vehicle as described in connection with the first transponder assembly.

This provides redundancy to the safety arrangement and thereby improves the reliability.

According to a second aspect of the invention, a vehicle according to claim 12 is provided. The vehicle comprises a brake and a first emergency stop circuit, wherein the brake is configured to be automatically applied in response to breaking of the first emergency stop circuit. The vehicle further comprises a safety arrangement according to the first aspect, wherein the first safety relay is connected in series to the first emergency stop circuit.

Optionally, the transponder is attached to the vehicle and the activator is releasably attached to the vehicle within the predetermined distance range from the transponder.

Optionally, the vehicle is an autonomous vehicle, such as fully autonomous vehicle or a semi-autonomous vehicle.

Optionally, the vehicle is a working machine. It may by way of example be a dump truck, a hauler truck, a tractor, a wheel loader, an articulated hauler, an excavator, a backhoe loader, or similar. The vehicle may be an autonomous working machine.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
- Fig. 1: is a schematic side view of a vehicle according to an embodiment,
- Fig. 2: schematically illustrates a safety arrangement according to an embodiment,
- Fig. 3: is a perspective view of a transponder assembly for use in a safety arrangement according to an embodiment, and
- Fig. 4: schematically illustrates a safety arrangement according to another embodiment.

The drawings show diagrammatic exemplifying embodiments of the present disclosure and are thus not necessarily drawn to scale. It shall be understood that the embodiments shown and described are exemplifying and that the disclosure is not limited to these embodiments. It shall also be noted that some details in the drawings may be exaggerated in order to better describe and illustrate the disclosure. Like reference characters refer to like elements throughout the description, unless expressed otherwise.

### DETAILED DESCRIPTION OF EXAMPLE EMBODIMENTS OF THE INVENTION

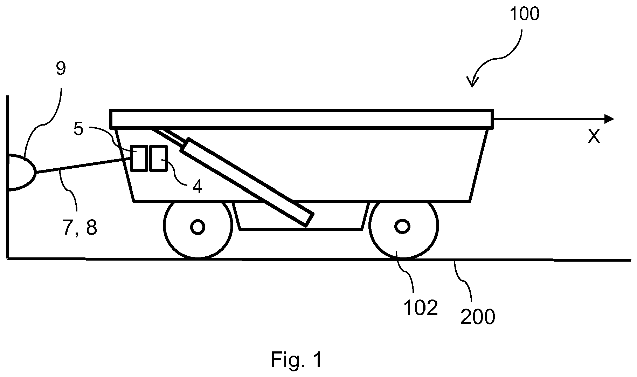

Fig. 1 illustrates an autonomous vehicle 100 in the form of an autonomous hauler truck for use in, for example, a quarry or at a construction site. The vehicle 100 is driven by a powertrain (not shown) configured for propulsion of the vehicle 100 via drive wheels 102, whereby the vehicle 100 is movable with respect to a ground surface 200, such as in a driving direction X.

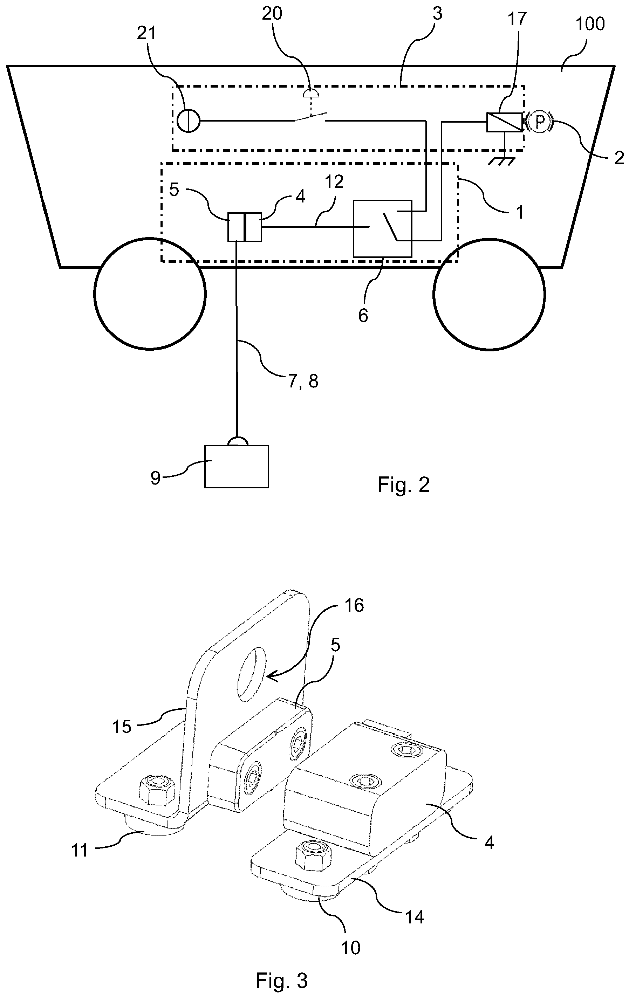

As illustrated in fig. 2, the vehicle 100 comprises a brake 2 and an emergency stop circuit 3. The emergency stop circuit 3 comprises at one end a power source 21, such as a battery, and at another end a brake relay 17. As long as the brake relay 17 is electrically connected to the power source 21, the brake relay 17 is closed and the vehicle 100 is able to move. If the power supply to the brake relay 17 is interrupted, the brake relay 17 opens and the brake 2 is applied. Hence, the brake 2, which may, e.g., be a parking brake or a service brake of the vehicle 100, is thereby configured to be automatically applied in response to breaking of the emergency stop circuit 3, for example by an operator pushing an emergency stop button 20, which may be located outside of the vehicle 100 or within the vehicle 100.

A safety arrangement 1 according to an embodiment of the invention is further provided on the vehicle 100. The safety arrangement 1 comprises a first safety relay 6, which is connected in series to the emergency stop circuit 3, between the power source 21 and the brake relay 17, so that opening of the first safety relay 6 breaks the emergency stop circuit 3 and triggers application of the brake 2. The safety arrangement 1 further comprises a transponder assembly comprising a transponder 4 and an activator 5. The transponder 4 is configured to output a first safety signal to the first safety relay 6 only when the activator 5 is located within a predetermined distance range from the transponder 4. The first safety relay 6 is configured to open automatically in the absence of the first safety signal from the transponder 4. Thus, in order for the vehicle 100 to be able to move, the activator 5 must be within the predetermined distance range from the transponder 4. If not, the emergency stop circuit 3 is broken by opening of the first safety relay 6, and the brake 2 is applied by means of the brake actuator.

Both the transponder 4 and the activator 5 are configured to be attached to the vehicle 100, such as to an external vehicle surface provided on, e.g., a body of the vehicle 100. A first one of the transponder 4 and the activator 5, herein the transponder 4, may be configured to be relatively firmly attached, while a second one, herein the activator 5, is configured to be releasable from the vehicle 100 by application of a pulling force.

The safety arrangement 1 further comprises a mechanical member 7 configured for pulling on the activator 5 when the vehicle 100 starts to move, thereby pulling the transponder 4 and the activator 5 apart and triggering the opening of the first safety relay 6 and the application of the brake 2. The mechanical member 7 herein comprises an elongated flexible member 8, such as a wire, which is connected to an object 9 arranged in fixed relation to the ground surface 200. In fig. 1, the elongated flexible member 8 is connected to an object 9 in the form of an eye bolt or similar attached to a wall. As the vehicle 100 starts to move in the driving direction X, the elongated flexible member 8 attached to the wall pulls the activator 5 off the vehicle surface, i.e., out from the predetermined distance range from the transponder 4. The first safety relay 6 is thereby opened, the brake 2 is applied, and the vehicle 100 stops. For this purpose, the elongated flexible member 8 should be as short as possible, reducing slack and reducing the response time.

The object 9 may instead of an object fixed to a wall be a heavy object placed on the ground surface 200 or an object fixed to the ground surface 200, such as a bolt, a loop, or similar.

The first safety relay 6, the transponder 4, and the activator 5 may advantageously be safety classified components. The transponder 4 and the activator 5 may be configured such that the transponder 4 only reacts to a unique activator 5, using e.g. radiofrequency identification (RFID) technology or similar. The transponder 4 is further configured to output one or two safety signals only when the activator 5 is located within the predetermined distance range, such as 10-20 mm, from the transponder 4. The transponder 4 may be electrically and/or communicatively connected to the safety relay by means of a wired connection 12, as schematically illustrated in fig. 2. A wireless connection may also be possible.

It is to be noted that the safety arrangement 1 is connected in series to the existing emergency stop circuit 3, such that any one of pushing the emergency stop button 20 and pulling apart the transponder assembly is sufficient to open the brake relay 17 and thereby apply the brake 2. A reset button (not shown) may be provided to close the first safety relay 6 and the emergency stop circuit 3 such that movement of the vehicle 100 is re-enabled when the activator 5 is again positioned within the predetermined distance range from the transponder 4.

Fig. 3 illustrates the transponder assembly including the transponder 4 and the activator 5 according to an embodiment. The transponder 4 is herein attached by screw mounting to a first bracket 14 and the activator 5 is attached to a second bracket 15, also by screw mounting. The first bracket 14 is attachable to the vehicle surface by means of two first magnets 10 (only one clearly visible in fig. 3). The second bracket 15 is attachable to the vehicle surface by means of two second magnets 11. The second bracket 15 further comprises an opening 16 for attaching the mechanical member 7 thereto. The first magnets 10 may be stronger than the second magnets 11, although this is not absolutely necessary since the pulling force is only applied to the second bracket 15 and not to the first bracket 14. The brackets 14, 15 may preferably be made of a non-magnetic material, so that the magnets 10 of the first bracket 14 are not attracted to the second bracket 15 and vice versa. This reduces the risk that the transponder 4 detaches from the vehicle together with the activator 5 as a pulling force is applied to the second bracket 15.

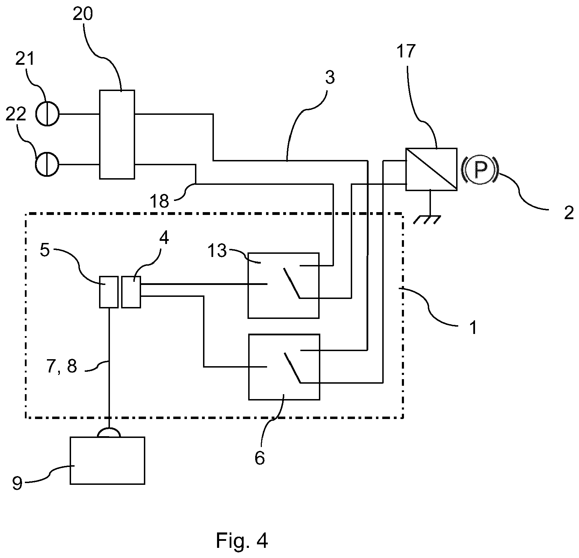

Fig. 4 illustrates an embodiment of the safety arrangement 1 in which a second safety relay 13 is provided in addition to the first safety relay 6 to improve the reliability of the safety arrangement 1. In this case, the vehicle 100 comprises a first emergency stop circuit 3 as described above and a second emergency circuit 18, wherein breaking of any one of the emergency stop circuits 3, 18 triggers application of the brake 2. Two power sources 21, 22 are herein provided, wherein the brake relay 17 is configured to open and trigger application of the brake 2 if any one of the circuits 3, 18 are broken. A single emergency stop button 20 may be provided, breaking both circuits 3, 18. The brake relay 17 is herein illustrated as a single brake relay, but it is of course possible to instead provide two separate brake relays. Similarly, it is possible to provide a single power source instead of two power sources 21, 22.

The transponder 4 is herein configured to send a first safety signal to the first safety relay 6 and a second safety signal to the second safety relay 13 when the activator 5 is located within the predetermined distance range. The second safety relay 13 is connected in series to the second emergency circuit 18 so that opening of the second safety relay 13 triggers application of the brake 2. Thus, both signals must be received at the respective safety relay 6, 13 for movement of the vehicle 100 to be enabled. If only the first safety signal is present, the second safety relay 13 is opened and the brake 2 is applied, and vice versa.

It is also possible to provide two transponder assemblies, wherein a first transponder assembly provides the first safety signal to the first safety relay 6 and a second transponder assembly provides the second safety signal to the second safety relay 13.

In the illustrated embodiments, the activator 5 is illustrated as being removable upon application of the pulling force. Instead, the transponder 4 may be removable while the activator 5 is more firmly attached.

It is to be understood that the present invention is not limited to the embodiments described above and illustrated in the drawings; rather, the skilled person will recognize that many changes and modifications may be made within the scope of the appended claims.

## Claims

1. A safety arrangement (1) for a vehicle (100), the vehicle comprising a brake (2) and a first emergency stop circuit (3), wherein the brake (2) is configured to be automatically applied in response to breaking of the first emergency stop circuit (3), the safety arrangement (1) comprising:
- a first transponder assembly comprising a transponder (4) and an activator (5),
- a first safety relay (6) configured to be connected in series to the first emergency stop circuit (3) so that opening of the first safety relay (6) breaks the first emergency stop circuit (3) and triggers application of the brake (2), wherein the first safety relay (6) is configured to open automatically in the absence of a first safety signal from the transponder (4),
wherein the transponder (4) is configured to output said first safety signal to the first safety relay (6) only when the activator (5) is located within a predetermined distance range from the transponder (4),
wherein a first one of the transponder (4) and the activator (5) is configured to be attached to the vehicle (100),
**characterised in that**
a second one of the transponder (4) and the activator (5) is configured to be attached to the vehicle (100) within the predetermined distance range from the first one of the transponder (4) and the activator (5), and releasable from the vehicle (100) by application of a pulling force, and
wherein the safety arrangement (1) further comprises a mechanical member (7) configured for pulling on the second one of the transponder (4) and the activator (5) when the vehicle (100) starts to move, thereby pulling the transponder (4) and the activator (5) apart and triggering the opening of the first safety relay (6) and the application of the brake (2).

2. The safety arrangement according to claim 1, wherein the mechanical member (7) comprises an elongated flexible member (8) configured to be attached to an object (9) arranged in a fixed relation to a ground surface (200) of the vehicle (100).

3. The safety arrangement according to any one of the preceding claims, wherein the second one of the transponder (4) and the activator (5) is releasably attachable to the vehicle (100) by means of at least one second magnet (11).

4. The safety arrangement according to claim 3, wherein the first one of the transponder (4) and the activator (5) is attachable to the vehicle (100) by means of at least one first magnet (10), optionally wherein the at least one first magnet (10) is stronger than the at least one second magnet (11).

5. The safety arrangement according to any one of claims 1-3, wherein the first one of the transponder (4) and the activator (5) is attachable to the vehicle (100) by means of at least one mechanical fastening device.

6. The safety arrangement according to any one of the preceding claims, wherein the first one of the transponder (4) and the activator (5) is the transponder (4) and the second one is the activator (5).

7. The safety arrangement according to any one of the preceding claims, wherein the transponder (4) is electrically and/or communicatively connected to the first safety relay (6) by a wired connection (12).

8. The safety arrangement according to any one of the preceding claims, wherein the transponder (4) and the activator (5) are uniquely pair coded.

9. The safety arrangement according to any one of the preceding claims, further comprising a second safety relay (13), wherein the second safety relay is configured to be connected in series to a second emergency stop circuit (18) of the vehicle (100), and wherein the brake (2) is configured to be automatically applied in response to breaking of the second emergency stop circuit (18).

10. The safety arrangement according to claim 9, wherein the second safety relay (13) is configured to open automatically in the absence of a second safety signal from the transponder (4), and wherein the transponder (4) is configured to output said second safety signal to the second safety relay (13) only when the activator (5) is located within the predetermined distance range from the transponder (4).

11. The safety arrangement according to claim 9, further comprising a second transponder assembly comprising a transponder and an activator, wherein the second safety relay is configured to open automatically in the absence of a second safety signal from the transponder of the second transponder assembly.

12. A vehicle comprising a brake (2) and a first emergency stop circuit (3), wherein the brake (2) is configured to be automatically applied in response to breaking of the first emergency stop circuit (3), the vehicle (100) further comprising a safety arrangement (1) according to any one of the preceding claims, wherein the first safety relay (6) is connected in series to the first emergency stop circuit (3).

13. The vehicle according to claim 12, wherein the transponder (4) is attached to the vehicle (100) and wherein the activator (5) is releasably attached to the vehicle (100) within the predetermined distance range from the transponder (4).

14. The vehicle according to claim 12 or 13 when dependent on any one of claims 9-11, wherein the vehicle (100) further comprises a second emergency stop circuit (18) and wherein the brake (2) is configured to be automatically applied in response to breaking of the second emergency stop circuit (18), the second safety relay (13) being connected in series to the second emergency stop circuit (18).

15. The vehicle according to claim 12 or 13, wherein the vehicle (100) is an autonomous vehicle, and/or wherein the vehicle (100) is a working machine.

## Patentansprüche

1. Sicherheitsanordnung (1) für ein Fahrzeug (100), das Fahrzeug umfassend eine Bremse (2) und einen ersten Not-Aus-Kreis (3), wobei die Bremse (2) so konfiguriert ist, dass sie als Reaktion auf die Unterbrechung des ersten Not-Aus-Kreises (3) automatisch betätigt wird, die Sicherheitsanordnung (1) umfassend:
- eine erste Transponderanordnung mit einem Transponder (4) und einen Aktivator (5),
- ein erstes Sicherheitsrelais (6), das so konfiguriert ist, dass es mit dem ersten Not-Aus-Kreis (3) in Reihe geschaltet wird, so dass das Öffnen des ersten Sicherheitsrelais (6) den ersten Not-Aus-Kreis (3) unterbricht und die Betätigung der Bremse (2) auslöst, wobei das erste Sicherheitsrelais (6) konfiguriert ist, um sich in Abwesenheit eines ersten Sicherheitssignals von dem Transponder (4) automatisch zu öffnen,
wobei der Transponder (4) konfiguriert ist, um das erste Sicherheitssignal nur dann an das erste Sicherheitsrelais (6) auszugeben, wenn sich der Aktivator (5) innerhalb eines vorbestimmten Abstandsbereichs von dem Transponder (4) befindet,
wobei der erste der Transponder (4) und der Aktivator (5) so konfiguriert sind, dass sie an dem Fahrzeug (100) angebracht werden können,
**dadurch gekennzeichnet, dass** ein zweiter der Transponder (4) und der Aktivator (5) so konfiguriert ist, dass er innerhalb des vorbestimmten Abstandsbereichs vom ersten Transponder (4) und Aktivator (5) am Fahrzeug (100) befestigt und durch Anwendung einer Zugkraft vom Fahrzeug (100) gelöst werden kann, und
wobei die Sicherheitsanordnung (1) ferner ein mechanisches Element (7) umfasst, das zum Ziehen am zweiten Transponder (4) und am Aktivator (5) konfiguriert ist, wenn sich das Fahrzeug (100) zu bewegen beginnt, wodurch der Transponder (4) und der Aktivator (5) auseinandergezogen werden und die Öffnung des ersten Sicherheitsrelais (6) und die Betätigung der Bremse (2) ausgelöst werden.

2. Sicherheitsanordnung nach Anspruch 1, wobei das mechanische Element (7) ein längliches flexibles Element (8) umfasst, das so konfiguriert ist, dass es an einem Objekt (9) befestigt werden kann, das in einer festen Beziehung zu einer Bodenfläche (200) des Fahrzeugs (100) angeordnet ist.

3. Sicherheitsanordnung nach einem der vorhergehenden Ansprüche, wobei der zweite der Transponder (4) und der Aktivator (5) mittels mindestens eines zweiten Magneten (11) lösbar am Fahrzeug (100) befestigbar ist.

4. Sicherheitsanordnung nach Anspruch 3, wobei der erste der Transponder (4) und Aktivator (5) mittels mindestens eines ersten Magneten (10) am Fahrzeug (100) befestigbar ist, wobei der mindestens eine erste Magnet (10) optional stärker ist als der mindestens eine zweite Magnet (11).

5. Sicherheitsanordnung nach einem der Ansprüche 1-3, wobei der erste der Transponder (4) und der Aktivator (5) mittels mindestens einer Befestigungsvorrichtung am Fahrzeug (100) befestigbar ist.

6. Sicherheitsanordnung nach einem der vorhergehenden Ansprüche, wobei der erste der Transponder (4) und der Aktivator (5) der Transponder (4) und der zweite der Aktivator (5) ist.

7. Sicherheitsanordnung nach einem der vorhergehenden Ansprüche, wobei der Transponder (4) über eine Kabelverbindung (12) elektrisch und/oder kommunikativ mit dem ersten Sicherheitsrelais (6) verbunden ist.

8. Sicherheitsanordnung nach einem der vorhergehenden Ansprüche, wobei der Transponder (4) und der Aktivator (5) eindeutig paarweise codiert sind.

9. Sicherheitsanordnung nach einem der vorhergehenden Ansprüche, ferner umfassend ein zweites Sicherheitsrelais (13), wobei das zweite Sicherheitsrelais so konfiguriert ist, dass es mit einem zweiten Not-Aus-Kreis (18) des Fahrzeugs (100) in Reihe geschaltet ist, und wobei die Bremse (2) so konfiguriert ist, dass sie als Reaktion auf das Unterbrechen des zweiten Not-Aus-Kreises (18) automatisch betätigt wird.

10. Sicherheitsanordnung nach Anspruch 9, wobei das zweite Sicherheitsrelais (13) so konfiguriert ist, dass es sich in Abwesenheit eines zweiten Sicherheitssignals vom Transponder (4) automatisch öffnet, und wobei der Transponder (4) so konfiguriert ist, dass er das zweite Sicherheitssignal nur dann an das zweite Sicherheitsrelais (13) ausgibt, wenn sich der Aktivator (5) innerhalb des vorbestimmten Abstandsbereichs vom Transponder (4) befindet.

11. Sicherheitsanordnung nach Anspruch 9, ferner umfassend eine zweite Transponderanordnung, die einen Transponder und einen Aktivator umfasst, wobei das zweite Sicherheitsrelais so konfiguriert ist, dass es sich automatisch öffnet, wenn kein zweites Sicherheitssignal von dem Transponder der zweiten Transponderanordnung vorliegt.

12. Fahrzeug umfassend eine Bremse (2) und einen ersten Not-Aus-Kreis (3), wobei die Bremse (2) so konfiguriert ist, dass sie als Reaktion auf das Unterbrechen des ersten Not-Aus-Kreises (3) automatisch betätigt wird, wobei das Fahrzeug (100) ferner eine Sicherheitsanordnung (1) nach einem der vorhergehenden Ansprüche umfasst, wobei das erste Sicherheitsrelais (6) in Reihe mit dem ersten Not-Aus-Kreis (3) geschaltet ist.

13. Fahrzeug nach Anspruch 12, wobei der Transponder (4) an dem Fahrzeug (100) angebracht ist und wobei der Aktivator (5) innerhalb des vorbestimmten Abstandsbereichs von dem Transponder (4) lösbar an dem Fahrzeug (100) angebracht ist.

14. Fahrzeug nach Anspruch 12 oder 13, wenn es von einem der Ansprüche 9-11 abhängt, wobei das Fahrzeug (100) ferner einen zweiten Not-Aus-Kreis (18) umfasst und wobei die Bremse (2) so konfiguriert ist, dass sie als Reaktion auf das Unterbrechen des zweiten Not-Aus-Kreises (18) automatisch betätigt wird, wobei das zweite Sicherheitsrelais (13) in Reihe mit dem zweiten Not-Aus-Kreis (18) geschaltet ist.

15. Fahrzeug nach Anspruch 12 oder 13, wobei das Fahrzeug (100) ein autonomes Fahrzeug ist, und/oder wobei das Fahrzeug (100) eine Arbeitsmaschine ist.

## Revendications

1. Installation de sécurité (1) pour véhicule (100), le véhicule comprenant un frein (2) et un premier circuit d'arrêt d'urgence (3), le frein (2) étant configuré pour être appliqué automatiquement en réponse à la rupture du premier circuit d'arrêt d'urgence (3), l'installation de sécurité (1) comprenant :
- un premier ensemble transpondeur comprenant un transpondeur (4) et un activateur (5),
- un premier relais de sécurité (6) configuré pour être connecté en série au premier circuit d'arrêt d'urgence (3) de sorte que l'ouverture du premier relais de sécurité (6) interrompt le premier circuit d'arrêt d'urgence (3) et déclenche l'application du frein (2), le premier relais de sécurité (6) étant configuré pour s'ouvrir automatiquement en l'absence d'un premier signal de sécurité du transpondeur (4),
le transpondeur (4) étant configuré pour émettre ledit premier signal de sécurité vers le premier relais de sécurité (6) uniquement lorsque l'activateur (5) est situé dans une plage de distance prédéterminée du transpondeur (4),
un premier transpondeur (4) ou l'activateur (5) étant configuré pour être fixé au véhicule (100),
**caractérisé en ce**
**qu'**un second transpondeur (4) ou activateur (5) est configuré pour être fixé au véhicule (100) dans la plage de distance prédéterminée par rapport au premier transpondeur (4) ou activateur (5), et détachable du véhicule (100) par application d'une force de traction, et
l'installation de sécurité (1) comprenant en outre un élément mécanique (7) configuré pour tirer sur le second transpondeur (4) et l'activateur (5) lorsque le véhicule (100) commence à se déplacer, ce qui permet de séparer le transpondeur (4) et l'activateur (5) et de déclencher l'ouverture du premier relais de sécurité (6) et l'application du frein (2).

2. Installation de sécurité selon la revendication 1, dans laquelle l'élément mécanique (7) comprend un élément flexible allongé (8) configuré pour être fixé à un objet (9) agencé en relation fixe par rapport à une surface de sol (200) du véhicule (100).

3. Installation de sécurité selon l'une quelconque des revendications précédentes, dans laquelle le second du transpondeur (4) et de l'activateur (5) peut être fixé de manière amovible au véhicule (100) au moyen d'au moins un second aimant (11).

4. Installation de sécurité selon la revendication 3, dans laquelle le premier du transpondeur (4) et de l'activateur (5) peut être fixé au véhicule (100) au moyen d'au moins un premier aimant (10), l'au moins un premier aimant (10) étant éventuellement plus fort que l'au moins un second aimant (11).

5. Installation de sécurité selon l'une quelconque des revendications 1 à 3, dans laquelle le premier du transpondeur (4) et de l'activateur (5) peut être fixé au véhicule (100) au moyen d'au moins un dispositif de fixation mécanique.

6. Installation de sécurité selon l'une quelconque des revendications précédentes, dans laquelle le premier du transpondeur (4) et de l'activateur (5) est le transpondeur (4) et le second est l'activateur (5).

7. Installation de sécurité selon l'une quelconque des revendications précédentes, dans laquelle le transpondeur (4) est connecté électriquement et/ou de manière communicante au premier relais de sécurité (6) par une connexion câblée (12).

8. Installation de sécurité selon l'une quelconque des revendications précédentes, dans laquelle le transpondeur (4) et l'activateur (5) sont codés par paires uniquement.

9. Installation de sécurité selon l'une quelconque des revendications précédentes, comprenant en outre un second relais de sécurité (13), le second relais de sécurité étant configuré pour être connecté en série à un second circuit d'arrêt d'urgence (18) du véhicule (100), et le frein (2) étant conçu pour être appliqué automatiquement en réponse à une rupture du deuxième circuit d'arrêt d'urgence (18).

10. Installation de sécurité selon la revendication 9, dans laquelle le second relais de sécurité (13) est configuré pour s'ouvrir automatiquement en l'absence d'un second signal de sécurité provenant du transpondeur (4), et le transpondeur (4) est configuré pour délivrer ledit second signal de sécurité au second relais de sécurité (13) uniquement lorsque l'activateur (5) est situé dans la plage de distance prédéterminée du transpondeur (4).

11. Installation de sécurité selon la revendication 9, comprenant en outre un second ensemble de transpondeur comprenant un transpondeur et un activateur, le second relais de sécurité étant configuré pour s'ouvrir automatiquement en l'absence d'un second signal de sécurité provenant du transpondeur du second ensemble de transpondeur.

12. Véhicule comprenant un frein (2) et un premier circuit d'arrêt d'urgence (3), le frein (2) étant configuré pour être appliqué automatiquement en réponse à la rupture du premier circuit d'arrêt d'urgence (3), le véhicule (100) comprenant en outre une installation de sécurité (1) selon l'une quelconque des revendications précédentes, le premier relais de sécurité (6) étant connecté en série au premier circuit d'arrêt d'urgence (3).

13. Véhicule selon la revendication 12, dans lequel le transpondeur (4) est fixé au véhicule (100) et l'activateur (5) est fixé de manière amovible au véhicule (100) dans la plage de distance prédéterminée par rapport au transpondeur (4).

14. Véhicule selon la revendication 12 ou 13 lorsqu'elle dépend de l'une quelconque des revendications 9 à 11, le véhicule (100) comprenant en outre un second circuit d'arrêt d'urgence (18) et le frein (2) étant configuré pour être appliqué automatiquement en réponse à la rupture du second circuit d'arrêt d'urgence (18), le second relais de sécurité (13) étant connecté en série au second circuit d'arrêt d'urgence (18).

15. Véhicule selon la revendication 12 ou 13, le véhicule (100) étant un véhicule autonome, et/ou le véhicule (100) étant un engin de chantier.
